# EUROPÄISCHE PATENTSCHRIFT

(11) **EP 1 174 698 B1**
(45) Veröffentlichungstag und Bekanntmachung des Hinweises auf die Patenterteilung: **02.11.2005**
(21) Anmeldenummer: 01114022.5
(22) Anmeldetag: 08.06.2001
(51) Int. Cl.: G01M 1/02

(54) **Verfahren und Vorrichtung zum optischen Abtasten eines Fahrzeugrades**
Procedure and device for the optical scanning of a vehicle wheel
Procédé et dispositif d'exploration optique d'une roue de véhicule

(30) Priorität: 19.07.2000 DE 10035118
(43) Veröffentlichungstag der Anmeldung: 23.01.2002
(73) Patentinhaber: Snap-on Equipment GmbH, 64319 Pfungstadt (DE)
(72) Erfinder: Conheady, Paul, County Clare (IE); Brennan, John, Carrigrohane, Cork (IE); Lowe, Helen, Sligo (IE)
(74) Vertreter: Nöth, Heinz

(56) Entgegenhaltungen:
- WO-A-98/10261
- DE-A- 4 325 533
- DE-A- 19 503 909

## Beschreibung

Die Erfindung betrifft ein Verfahren zum optischen Abtasten eines Fahrzeugrades nach dem Oberbegriff des Patentanspruches 1 und eine Vorrichtung hierzu nach dem Oberbegriff des Patentanspruches 9.

Bei einem derartigen Verfahren und einer derartigen Vorrichtung, welche aus der WO 98/10261 bekannt sind, wird von einer Lichtquelle, die als Laserstrahlquelle ausgebildet ist, ein Lichtstrahl emittiert und auf eine Stelle neben einem an der Felgeninnenseite befestigten Ausgleichsgewicht gerichtet. Der von dieser angetasteten Stelle reflektierte Strahl wird von einem positionsempfindlichen Empfänger empfangen und nach der Triangulationsmethode wird die Position der angetasteten Stelle bzw. des an der Felge befestigten Ausgleichsgewichtes für eine Kontrolle ermittelt. Die Lichtquelle und der positionsempfindliche Empfänger befinden sich auf einem gemeinsamen Träger, welcher von Hand gedreht werden kann, so dass der emittierte Lichtstrahl an die gewünschte Position, an welcher ein Ausgleichsgewicht an der Felge befestigt ist, gerichtet werden kann.

Ferner besitzt die bekannte Vorrichtung einen Schrittmotor, mit welchem nach Durchführung der Unwuchtmessung am auszuwuchtenden Rad die Lichtquelle allein so verdreht werden kann, dass der von ihr ausgesendete Lichtstrahl auf die Ausgleichsstelle an der Radfelge gerichtet wird, an welcher der Unwuchtausgleich, beispielsweise durch Befestigen eines Ausgleichsgewichtes durchzuführen ist.

Ferner ist aus der WO 96/07880 ein Verfahren und eine Vorrichtung zum Auswuchten eines Kraftfahrzeugrades bekannt, bei welchem mittels einer Abtasteinrichtung eine Kontur, insbesondere Innenkontur der Radfelge ermittelt und aus dieser Kontur in Verbindung mit Messwerten der Unwuchtmesseinrichtung die optimalen Positionen und Größen für Ausgleichsgewichte bestimmt werden.

Aufgabe der Erfindung ist es, ein Verfahren und eine Vorrichtung der eingangs genannten Art zu schaffen, mit denen auf einfache Weise komplexe Konturverläufe, wie schrägen Kanten, Verrundungen und dergleichen am Kraftfahrzeuggrad erfasst werden können.

Diese Aufgabe wird durch die Ansprüche 1, 9 gelöst.

Hierzu werden der von der insbesondere als Laser ausgebildeten Lichtquelle emittierte Strahl und der positionsempfindliche Empfänger, welcher den an der vom emittierten Strahl angetasteten Stelle des Rades reflektierten Strahl empfängt, um eine gemeinsame Achse für aufeinanderfolgende Abstandsmessschritte synchron in einer im wesentlichen senkrecht durch die Felgenoberfläche des Kraftfahrzeugrades gelegten Messebene geschwenkt. Bei den aufeinanderfolgenden Messschritten werden die jeweiligen Abstände der nacheinander angetasteten Radstellen zu einem Bezugsort, der ortsfest an der Auswuchtmaschine, an welcher die Unwuchtmessung und der Unwuchtausgleich durchgeführt wird, gemessen. Vorzugsweise werden aus der jeweiligen Richtung des emittierten Lichtstrahles und des reflektierten Lichtstrahles nach der eindimensionalen aktiven Triangulationsmethode die jeweiligen Abstände der angetasteten Radstellen zum Bezugsort gemessen. Hieraus ergibt sich zwangsläufig die Lagebestimmung der jeweils angetasteten Radstelle bezüglich des maschinenfesten Bezugsortes. Aus den mehreren aneinandergefügten angetasteten und vermessenen Radstellen läßt sich sehr genau die Kontur, insbesondere die Innenkontur des Kraftfahrzeugrades ermitteln. Die Abtastbewegung wird von einem Schrittmotor bewirkt, der die Lichtquelle und den positionsempfindlichen Empfänger synchron um die gemeinsame Schwenkachse schwenkt. Hierzu können Lichtquelle und der positionsempfindlichen Empfänger auf einem gemeinsamen um die Schwenkachse schwenkbaren Träger befestigt sein. Mittels eines Drehwinkelgebers, der in den Schrittmotor integriert sein kann oder separat angeordnet sein kann, wird die jeweilige Drehwinkelposition der Lichtquelle und des positionsempfindlichen Empfängers erfasst und an die Auswerteeinrichtung zusammen mit den Messsignalen des positionsempfindlichen Empfängers weitergeleitet. Die Schwenkachse, um welche die Lichtquelle und der positionsempfindliche Empfänger geschwenkt werden, besitzt gegenüber dem Bezugsort, welcher maschinenfest an der Auswuchtmaschine vorgesehen sein kann, eine fest vorgegebene Position.

Die Messebene, innerhalb welcher die Lichtquelle und der positionsempfindliche Empfänger und damit der emittierte und der reflektierte Lichtstrahl bewegt werden, verläuft vorzugsweise parallel zur Radachse. Die Messebene kann bei waagrecht angeordneter Radachse unterhalb der Radachse verlaufen. Es ist jedoch auch möglich, dass die Messebene schräg zur Horizontalen verläuft und sich beispielsweise radial zur Messwellen- bzw. Radachse erstreckt.

Mit dem emittierten Lichtstrahl kann ferner der radial sich erstreckende Bereich des Scheibenrades des Kraftfahrzeugrades angetastet werden. Hierbei können in bevorzugter Weise Winkelpositionen von Fußpunkten von sich radial von einem mittleren Radscheibenteil erstreckende Speichen oder Stegen angetastet bzw. ermittelt werden. Diese Messwerte können dann für ein Hinterspeichenplatzieren der Ausgleichsgewichte, wie es aus der US 5,591,909 bekannt ist, verwendet werden.

Vorzugsweise ist der Schwenkwinkel für die gemeinsame Schwenkbewegung der Lichtquelle und des positionsempfindlichen Empfängers um die gemeinsame Schwenkachse so bemessen, dass ausgehend von etwa der Radmitte über den sich radial erstreckenden Bereich des Scheibenrades, die Innenfläche der Felge und den Reifenwulst der antastende emittierte Lichtstrahl und die vom Empfänger empfangene reflektierte Strahlkomponente geschwenkt werden können. Bei sich drehendem Rad können mit Hilfe der Erfindung ferner seitliche in axialer Richtung verlaufende Verlagerungen der vom emittierten Lichtstrahl angetasteten Radstellen ermittelt werden.

Nach Durchführung der Unwuchtmessung kann der emittierte Lichtstrahl auf die Ausgleichsstelle am Rad gerichtet werden, an welcher der Unwuchtausgleich durchzuführen ist, wie es aus der WO 98/10261 bekannt ist.

Anhand der Figuren wird an einem Ausführungsbeispiel die Erfindung noch näher erläutert.

Es zeigt
- Fig. 1: eine Draufsicht eines Ausführungsbeispiels einer Ab- tastvorrichtung zum optischen Abtasten eines auswuch- tenden Kraftfahrzeuges;
- Fig. 2: die in Fig. 1 dargestellte Abtastvorrichtung, einge- baut an der Unterseite einer Kraftmesseinrichtung ei- ner Auswuchtmaschine in einer Ansicht von unten;
- Fig. 3: das in den Fig. 1 und 2 dargestellte Ausführungsbei- spiel in einer Ansicht von vorne in axialer Richtung einer Messwelle der Auswuchtmaschine gesehen; und
- Fig. 4: in perspektivischer auseinandergezogener Darstellung Einzelteile der Abtasteinrichtung.

Die in den Figuren dargestellte Vorrichtung zum optischen Abtasten eines auszuwuchtenden Kraftfahrzeugrades 1 mit radial verlaufendem Radscheibenteil 23 und Felge 22 besitzt eine Lichtquelle 6 und einen positionsempfindlichen Empfänger 7, welche auf einem gemeinsamen Träger 18 angeordnet sind. Der gemeinsame Träger 18 kann die Form eines Winkelhebels aufweisen, an dessen beiden Enden die Lichtquelle 6 und der positionsempfindliche Empfänger sich befinden. Der Träger 18 sowie die daran befestigten Lichtquelle 6 und Empfänger 7 sind um eine gemeinsame Schwenkachse 4 schwenkbar gelagert.

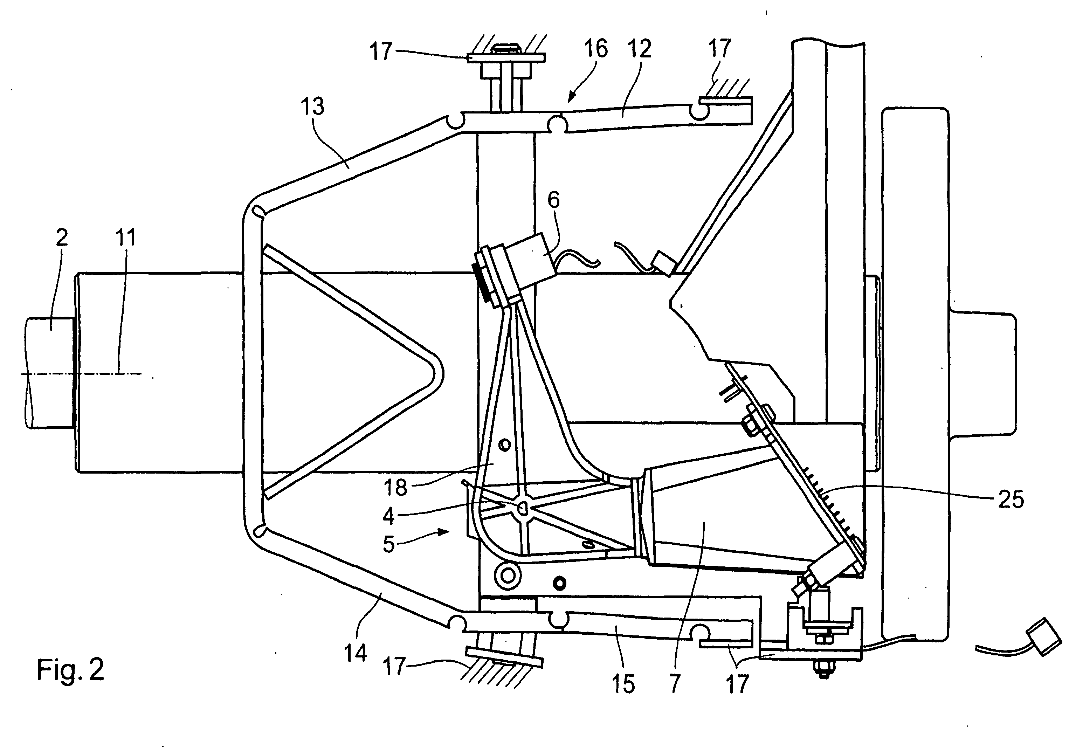

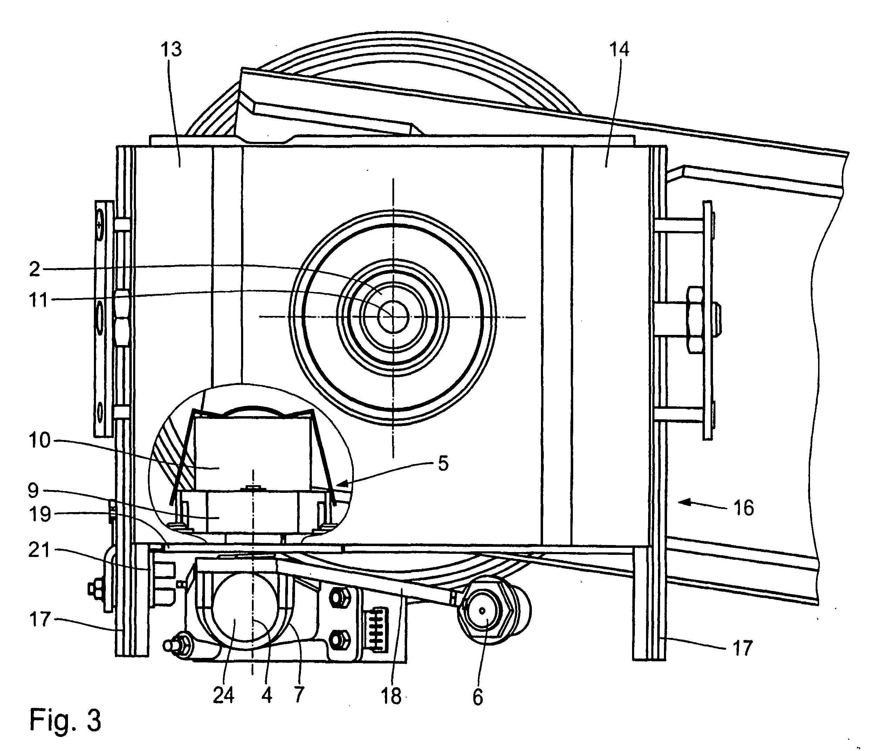

In bekannter Weise wird ein auszuwuchtendes Kraftfahrzeug 1 auf eine Messwelle 2 einer Auswuchtmaschine, von welcher in den Fig. 2 und 3 der Bereich einer Kraftmesseinrichtung 16 dargestellt ist, befestigt. Die Befestigung des auszuwuchtenden Fahrzeugrades 1 erfolgt zentrisch, so dass eine Radachse 3 und eine Messwellenachse 11 koaxial verlaufen, wenn das Fahrzeugrad für die Unwuchtmessung an der Messwelle 2 befestigt ist.

Die Kraftmesseinrichtung 16 kann in bekannter Weise, wie aus der WO 00/14503 (DE 198 44 975 A1) bekannt ist, ausgebildet sein. Hierzu besitzt die Kraftmesseinrichtung Stützplatten 12 bis 15, welche gelenkig miteinander verbunden sind, und im wesentlichen in vertikaler Richtung sich erstrecken. Durch diese Messanordnung werden virtuelle Lagerstellen der Messwelle 2 am Rahmen 17 der Auswuchtmaschine gebildet. Mittels Kraftaufnehmern, welche in den Figuren nicht näher dargestellt sind, werden der Radunwucht entsprechende Fliehkräfte gemessen und für den Unwuchtausgleich in einer Auswerteelektronik 8 in bekannter Weise ausgewertet.

Für eine Optimierung des Unwuchtausgleiches kann mit Hilfe der dargestellten Vorrichtung eine genaue Konturbestimmung der zur Radachse 3 hin gerichteten Innenseite der Felge 22 sowie des radialen Radscheibenteils 23 ermittelt werden. Am radialen Radscheibenteil 23 können die Positionen von Speichen bzw. radial verlaufenden Stegen, insbesondere die Winkellagen der zugeordneten Fußpunkte im Bereich der Radachse ermittelt werden.

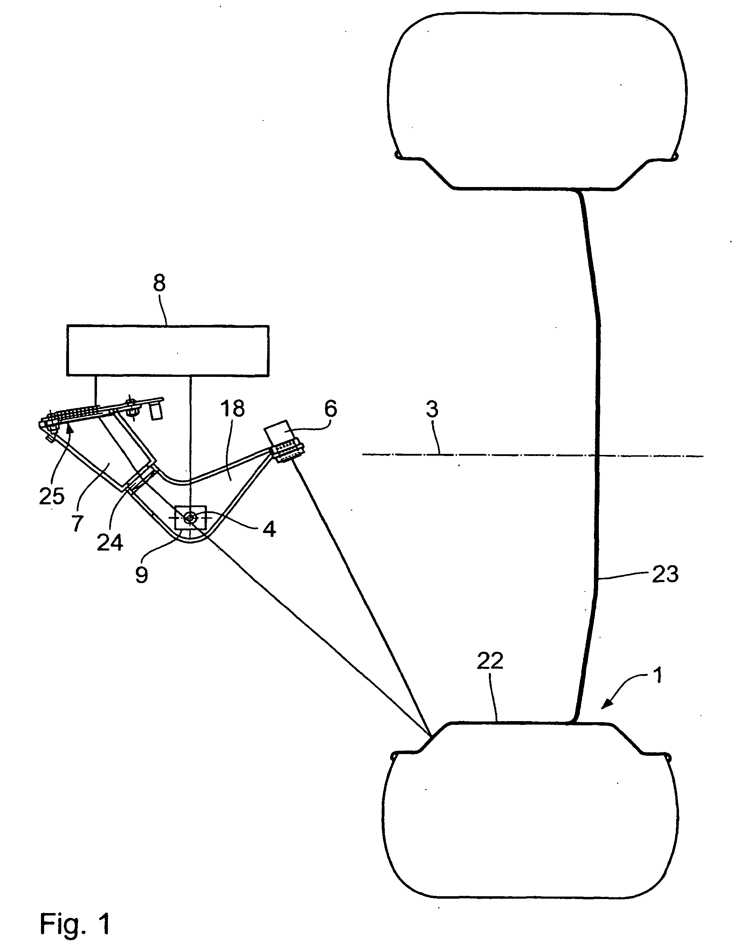

Hierzu werden in der Messebene, wie es in Fig. 1 gezeigt ist, jeweilige Punkte am Kraftfahrzeugrad, insbesondere der Innenseite des Kraftfahrzeugs mit dem von der Lichtquelle 6 ausgesendeten Lichtstrahl angetastet. Der von der angetasteten Stelle reflektierte Strahl wird vom positionsempfindlichen Empfänger 7 empfangen. Dieser kann hierzu eine Empfängeroptik 24 aufweisen, welche den reflektierten Strahl auf einen CCD(charge coupled device)-Sensor 25 fokussiert. Dieser CCD-Sensor kann mehrere lokale Maxima einer Beleuchtungsstärkefunktion getrennt voneinander erfassen. Die Richtung des reflektierten Strahles hängt von der Entfernung der angetasteten Stelle zur Lichtquelle 6 hin ab. In Abhängigkeit von diesem Abstand wird daher der reflektierte Strahl über die Empfängeroptik 24 auf eine bestimmte Stelle des CCD-Sensors 25 gerichtet, der dann ein positionsempfindliches bzw. positionsabhängiges Signal an die Auswerteelektronik 8 liefert.

Bei der Erfassung der Radkontur wird durch einen Drehantrieb 5, welcher den gemeinsamen Träger 18 und einen Schrittmotor 10 sowie ein nicht näher bezeichnetes zwischengeschaltetes Zwischengetriebe aufweist, die erforderliche Schwenkbewegung der Lichtquelle 6 und des Empfängers 7 durchgeführt. Mit Hilfe des Schrittmotors 10 wird der Träger 18 um geringe Winkelunterschiede innerhalb der Messebene verschwenkt. Auf diese Weise werden aufeinanderfolgende Punkte bzw. Stellen am Kraftfahrzeug angetastet und ihr jeweiliger Abstand von der Lichtquelle 6 durch die CCD-Sensor 25 abgegebenen Messsignale ermittelt.

Da die Schwenkachse 4, um welche die Lichtquelle 6 und der CCD-Sensor 25 geschwenkt werden, ortsfest am Maschinenrahmen 17 angebracht ist, erreicht man eine genaue Positionsbestimmung der jeweils am Kraftfahrzeugrad angetasteten Stelle bezüglich der Kraftmesseinrichtung 16 insbesondere der Messwertgeber dieser Kraftmesseinrichtung. Die ermittelten Messwerte können daher mit den Messwerten der Kraftmesseinrichtung 16, die bei der Unwuchtmessung am Kraftfahrzeugrad 1 ermittelt wurden, für einen optimalen Unwuchtausgleich, wie es in der DE 41 22 844 A1 beschrieben ist, ausgewertet werden.

Die jeweilige Winkelposition der Lichtquelle 6 und des positionsempfindlichen Empfängers 7 bzw. dessen CCD-Sensors 25 werden von einem Drehwinkelgeber 9, welcher in den Schrittmotor 10 integriert oder separat angeordnet sein kann, erfasst. Entsprechende Drehwinkelsignale werden vom Drehwinkelgeber 9 an die Auswerteelektronik 8 geliefert.

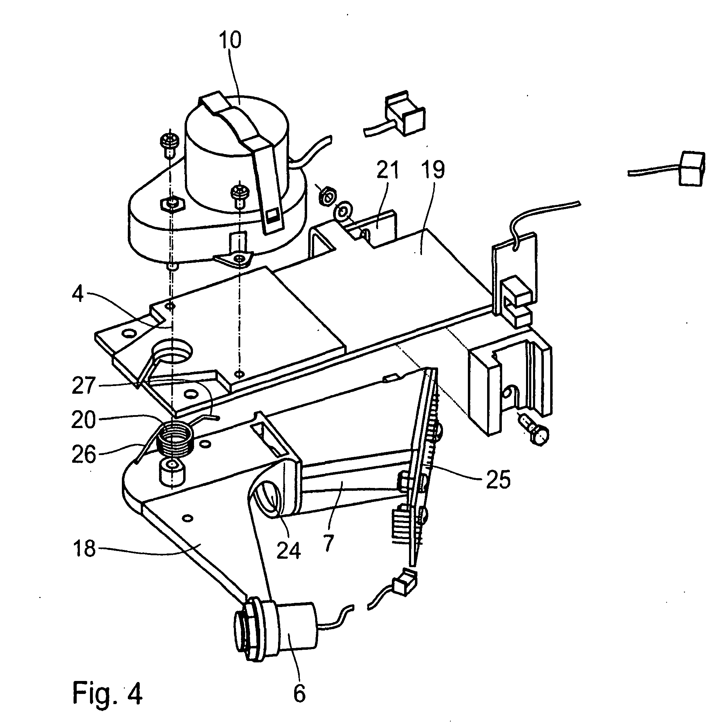

Wie insbesondere aus der Fig. 3 zu ersehen ist, befindet sich die Messebene, in welcher die Lichtquelle 6 und der positionsempfindliche Empfänger 7 angeordnet und geschwenkt werden, unterhalb der Kraftmesseinrichtung 16 der Auswuchtmaschine. Der nach Art eines Winkelhebels ausgebildete Träger 18 ist hierzu gegen die Vorspannkraft einer Feder 20 an einer Trägerplatte 19 (Fig. 4) um die Schwenkachse 4 schwenkbar gelagert. Die Trägerplatte 19 ist über eine abgewinkelte Befestigungsplatte 21 am Rahmen 17 der Auswuchtmaschine, beispielsweise mittels einer Schraubverbindung befestigt (Fig. 3 und 4). Zur raumsparenden Anordnung des Schrittmotors 10 kann dieser in dem von den Stützplatten 12 bis 15 der Kraftmesseinrichtung 16 angeordnet sein.

In der Figur 3 ist die Anordnung des Schrittmotors 10 durch die aufgebrochenen Stützplatten sichtbar

Durch die Feder 20, welche sich an der Trägerplatte 19 und am Träger 18 mit ihren Schenkeln 26, 27 abstützt, werden die Lichtquelle 6 und der positionsempfindliche Empfänger 7 in eine Ruheposition vorgespannt. In dieser Ruheposition ist die Lichtquelle 6 bzw. der von ihr ausgesendete Lichtstrahl auf einen mittleren Bereich des Kraftfahrzeugrades 1 in der Nähe der Radachse 3 gerichtet. Beim Abtasten der Innenfläche des Kraftfahrzeugrades wird daher der antastende von der Lichtquelle 6 ausgesendete Lichtstrahl von innen, d.h. in der Nähe der Radachse 3 nach außen, d.h. in Richtung zum Radumfang hin, gegen die Vorspannkraft der Feder 20 durch den Antrieb des Schrittmotors 10 geschwenkt.

Mit der dargestellten Vorrichtung können auch seitliche Auslenkungen in axialer Richtung der angetasteten Radstellen, insbesondere der auf dem angetasteten Radius liegenden Radstellen ermittelt werden.

## Patentansprüche

1. Verfahren zum optischen Abtasten eines Fahrzeugrades, insbesondere eines Kraftfahrzeugrades, bei dem in einem Messschritt mittels eines von einer Lichtquelle emittierten Lichtstrahls eine Radstelle angetastet und zu einem positionsempfindlichen Empfänger reflektiert wird und aus den Richtungen des emittierten Strahls und reflektierten Strahls der Abstand der angetasteten Stelle zu einem Bezugsort gemessen wird, wobei für aufeinanderfolgende Messschritte der emittierte Strahl und der positionsempfindliche Empfänger um eine gemeinsame Achse in einer die Felgenoberfläche des Kraftfahrzeugrades in einem stumpfen oder etwa rechten Winkel schneidenden Messebene, welche unterhalb der waagrecht angeordneten Radachse liegt, synchron geschwenkt werden,
**dadurch gekennzeichnet, dass** aus den gemessenen Abständen von aneinandergefügten Radstellen die Konturen der zur Radachse hin gerichteten Innenseite der Radfelge und des radialen Radscheibenteils ermittelt werden.

2. Verfahren nach Anspruch 1,
**dadurch gekennzeichnet, dass** die aufeinanderfolgenden Messschritte in einer parallel zur Radachse verlaufenden Messebene durchgeführt werden.

3. Verfahren nach Anspruch 1,
**dadurch gekennzeichnet, dass** die aufeinanderfolgenden Messschritte in einer horizontal verlaufenden Messebene durchgeführt werden.

4. Verfahren nach einem der Ansprüche 1 bis 3,
**dadurch gekennzeichnet, dass** mit dem emittierten Strahl der radial sich erstreckende Bereich des Scheibenrades zur Bestimmung von Winkelpositionen von insbesondere Fußpunkten von sich radial von einem mittleren Radscheibenteil erstreckenden Speichen oder Stegen angetastet wird.

5. Verfahren nach einem der Ansprüche 1 bis 4, **dadurch gekennzeichnet, dass** bei sich drehendem Rad seitliche Verlagerungen in axialer Richtung der auf einem bestimmten Radius liegenden angetasteten Stellen des Rades ermittelt werden, wobei der emittierte Strahl zumindest während einer Umdrehung des Rades in die dem bestimmten Radius entsprechende Richtung ausgesendet wird.

6. Verfahren nach einem der Ansprüche 1 bis 5, **dadurch gekennzeichnet, dass** bei der Messung mit dem emittierten Strahl zunächst eine näher zur Radachse liegende Stelle am Rad angetastet wird und anschließend der emittierte Strahl zum Radumfang hin geschwenkt wird.

7. Verfahren nach einem der Ansprüche 1 bis 6, **dadurch gekennzeichnet, dass** aus den Messsignalen des positionsempfindlichen Empfängers mittels eindimensionaler Triangulation und aus der jeweiligen Drehwinkelposition des emittierten und von der angetasteten Stelle reflektierten Strahls der Abstand der angetasteten Stelle zum Bezugsort bestimmt wird.

8. Verfahren nach einem der Ansprüche 1 bis 7, **dadurch gekennzeichnet, dass** nach Durchführung der Unwuchtmessung der emittierte Strahl auf die Ausgleichsstelle am Rad gerichtet wird, an welcher der Unwuchtausgleich durchgeführt wird.

9. Vorrichtung zum optischen Abtasten eines auswuchtenden Fahrzeugrades (1) mit einer Messwelle (2), an welcher das Rad für eine Drehung um eine Radachse (3) befestigbar ist, einer Lichtquelle (6), welche einen emittierten Lichtstrahl auf eine Stelle des Rades richtet, einem positionsempfindlichen Empfänger (5), welcher den von der angetasteten Stelle des Rades reflektierten Strahl empfängt, einem einen Schrittmotor (10) aufweisenden Drehantrieb (5) für eine synchrone Schwenkbewegung der Lichtquelle (6) und des Empfängers (7) um eine gemeinsame Schwenkachse (4), einer Auswerteelektronik (8), welche Messwerte des positionsempfindlichen Empfängers (7) für eine Ermittlung des Abstandes der von der Lichtquelle (6) angetasteten Stelle des Fahrzeugrades von einem Bezugsort auswertet, und einem Drehwinkelgeber (9), der ein der jeweiligen Drehwinkelposition des Schrittmotors (10) proportionaes Signal an die A swerteeinrichtung (8) liefert, durchführend das Verfahren nach Anspruch 1,
**dadurch gekennzeichnet, dass** die Messwelle (2) über gelenkig miteinander verbundene Stützplatten (12 bis 15) einer Kraftmesseinrichtung (16) an einem Rahmen (17) abgestützt ist und der Schrittmotor (10) zwischen den Stützplatten (12 bis 15) und die Lichtquelle (6) sowie der Empfänger (7) unterhalb der Stützplatten (12 bis 15) angeordnet sind.

10. Vorrichtung nach Anspruch 9,
**dadurch gekennzeichnet, dass** bei waagrechter Anordnung der Messwelle (2) die Lichtquelle (6) und der Empfänger (7) in einer Ebene unterhalb der Messwelle (2) schwenkbar angeordnet sind.

11. Vorrichtung nach Anspruch 9 oder 10,
**dadurch gekennzeichnet, dass** die Schwenkachse (4) senkrecht zur Messwellenachse (11) verläuft.

12. Vorrichtung nach Anspruch 11,
**dadurch gekennzeichnet, dass** die Schwenkachse (4) außerhalb der Messwellenachse (11) liegt.

13. Vorrichtung nach einem der Ansprüche 9 bis 12,
**dadurch gekennzeichnet, dass** die Lichtquelle (6) und der Empfänger (7) in eine Ruheposition vorgespannt sind.

## Claims

1. A method of optically scanning a vehicle wheel, in particular a motor vehicle wheel, in which in a measuring step a wheel location is sensed by means of a light beam emitted by a light source and reflected to a position-sensitive receiver and the spacing of the sensed location relative to a reference location is measured from the directions of the emitted beam and the reflected beam, wherein for successive measuring steps the emitted beam and the position-sensitive receiver are pivoted synchronously about a common axis in a measuring plane which intersects the rim surface of the motor vehicle wheel at an obtuse or approximately right angle and which is below the horizontally arranged wheel axis,
**characterised in that** the contours of the inward side, which is directed towards the wheel axis, of the wheel rim and of the radial wheel disc portion are ascertained from the measured spacings of adjoined wheel locations.

2. A method according to claim 1 **characterised in that** the successive measuring steps are carried out in a measuring plane extending parallel to the wheel axis.

3. A method according to claim 1 **characterised in that** the successive measuring steps are carried out in a horizontally extending measuring plane.

4. A method according to one of claims 1 to 3 **characterised in that** the radially extending region of the disc wheel is sensed with the emitted beam for determining angular positions of in particular base points of spokes or limbs extending radially from a central wheel disc portion.

5. A method according to one of claims 1 to 4 **characterised in that** when the wheel is rotating lateral displacements in the axial direction of the sensed locations which are on a given radius are ascertained, wherein the emitted beam is emitted at least during one revolution of the wheel in the direction corresponding to the given radius.

6. A method according to one of claims 1 to 5 **characterised in that** in the measurement procedure firstly a location on the wheel which is closer to the wheel axis is sensed with the emitted beam and then the emitted beam is pivoted towards the periphery of the wheel.

7. A method according to one of claims 1 to 6 **characterised in that** the spacing of the sensed location relative to the reference location is determined from the measurement signals of the position-sensitive receiver by means of one-dimensional triangulation and from the respective rotary angle position of the emitted beam reflected by the sensed location.

8. A method according to one of claims 1 to 7 **characterised in that** after the unbalance measurement procedure has been performed the emitted beam is directed on to the balancing location on the wheel, at which the balancing operation is effected.

9. Apparatus for optically scanning a vehicle wheel (1) to be balanced comprising a measuring shaft (2) on which the wheel can be fixed for rotation about a wheel axis (3), a light source (6) which directs an emitted light beam on to a location on the wheel, a position-sensitive receiver (5) which receives the beam reflected by the sensed location on the wheel, a rotary drive (5) having a stepping motor (10) for synchronous pivotal movement of the light source (6) and the receiver (7) about a common pivot axis (4), an electronic evaluation means (8) which evaluates measurement values of the position-sensitive receiver (7) for ascertaining the spacing of the location on the vehicle wheel, which is sensed by the light source (6), from a reference location, and a rotary angle sensor (9) which supplies the evaluation device (8) with a signal proportional to the respective rotary angle position of the stepping motor (10), for carrying out the method according to claim 1,
**characterised in that** the measuring shaft (2) is supported on a frame (17) by way of pivotably interconnected support plates (12 to 15) of a force-measuring device (16) and the stepping motor (10) is arranged between the support plates (12 to 15) and the light source (6) and the receiver (7) are arranged beneath the support plates (12 to 15).

10. Apparatus according to claim 9 **characterised in that** when the measuring shaft (2) is arranged horizontally the light source (6) and the receiver (7) are arranged pivotably in a plane beneath the measuring shaft (2).

11. Apparatus according to claim 9 or claim 10 **characterised in that** the pivot axis (4) extends perpendicularly to the axis (11) of the measuring shaft.

12. Apparatus according to claim 11 **characterised in that** the pivot axis (4) is outside the axis (11) of the measuring shaft.

13. Apparatus according to one of claims 9 to 12 **characterised in that** the light source (6) and the receiver (7) are biased into a rest position.

## Revendications

1. Procédé d'exploration optique d'une roue de véhicule, notamment d'une roue de véhicule automobile, dans lequel, dans un stade de mesure, on explore un point de la roue au moyen d'un faisceau lumineux émis par une source lumineuse et on réfléchit le faisceau sur un récepteur sensible à la position et on mesure à partir des directions du faisceau émis et du faisceau réfléchi, la distance du point exploré à un emplacement de référence, dans lequel, pour des stades de mesure successifs, on fait basculer en synchronisme le faisceau émis et le récepteur sensible à la position par rapport à un axe commun dans un plan de mesure coupant la surface de la jante de la roue du véhicule automobile suivant un angle obtus ou à peu près droit et qui se trouve en dessous de l'axe de la roue disposé horizontalement,
**caractérisé en ce qu'**à partir des intervalles mesurés entre des points joints de la roue, on détermine les contours de la face intérieure, dirigée vers l'axe de la roue, de la jante de la roue et de la partie radiale du disque de la roue.

2. Procédé suivant la revendication 1, **caractérisé en ce que** l'on effectue les stades de mesure successifs dans un plan de mesure s'étendant parallèlement à l'axe de la roue.

3. Procédé suivant la revendication 1, **caractérisé en ce que** l'on effectue les stades de mesure successifs dans un plan de mesure s'étendant horizontalement.

4. Procédé suivant l'une des revendications 1 à 3, **caractérisé en ce que** l'on explore par le rayon émis la partie s'étendant radialement de la roue à disque pour déterminer des positions angulaires, notamment de points de pieds de rayons ou de barrettes, s'étendant radialement depuis une partie médiane du disque de roue.

5. Procédé suivant l'une des revendications 1 à 4, **caractérisé en ce que** l'on détermine, lorsque la roue tourne, des décalages latéraux dans la direction axiale des points balayés de la roue se trouvant sur un rayon déterminé, le faisceau émis étant émis pendant au moins un tour de la roue dans la direction correspondant au rayon déterminé.

6. Procédé suivant l'une des revendications 1 à 5, **caractérisé en ce que**, lors de la mesure, on balaie par le faisceau émis d'abord un point de la roue se trouvant à proximité de l'axe de la roue et ensuite on fait basculer le faisceau émis vers la périphérie de la roue.

7. Procédé suivant l'une des revendications 1 à 6, **caractérisé en ce que** l'on détermine à partir des signaux de mesure du récepteur sensible à la position au moyen d'une triangulation unidimensionnelle et à partir de la position angulaire en rotation respective du faisceau émis et du faisceau réfléchi par le point exploré, la distance du point exploré à l'emplacement de référence.

8. Procédé suivant l'une des revendications 1 à 7, **caractérisé en ce qu'**après avoir effectué la mesure du balourd, on dirige le faisceau émis sur la roue sur le point de compensation où l'on effectue la compensation du balourd.

9. Dispositif d'exploration optique d'une roue (1) de véhicule automobile à équilibrer comprenant un arbre (2) de mesure sur lequel la roue peut être fixée en vue de tourner par rapport à un axe (3) de la roue, une source (6) lumineuse qui dirige un faisceau lumineux émis sur un point de la roue, un récepteur (7) sensible à la position qui reçoit le faisceau émis par le point exploré de la roue, un entraînement (5) en rotation ayant un moteur (10) pas à pas pour effectuer un mouvement de basculement en synchronisme de la source (6) lumineuse et du récepteur (7) par rapport à un axe (4) de basculement commun, une électronique (8) d'exploitation qui exploite des valeurs de mesure du récepteur (7) sensible à la position pour déterminer la distance du point balayé par la source (6) lumineuse de la roue du véhicule à un emplacement de référence et un indicateur (9) d'angle de rotation qui fournit au dispositif (8) d'exploitation un signal proportionnel à la position angulaire en rotation respective du moteur (10) pas à pas, effectuant le procédé suivant la revendication 1, **caractérisé en ce que** l'arbre (2) de mesure s'appuie par des plaques (12 à 15) d'appui articulées entre elles d'un dynamomètre (16) sur un bâti (17) et le moteur (10) pas à pas est disposé entre les plaques (12 à 15) d'appui, tandis que la source (6) lumineuse ainsi que le récepteur (7) sont disposés en dessous des plaques (12 à 15) d'appui.

10. Dispositif suivant la revendication 9, **caractérisé en ce que**, lorsque l'arbre (2) de mesure est horizontal, la source (6) lumineuse et le récepteur (7) sont montés basculant dans un plan en dessous de l'arbre (2) de mesure.

11. Dispositif suivant la revendication 9 ou 10, **caractérisé en ce que** l'axe (4) de basculement est perpendiculaire à l'axe (11) de l'arbre de mesure.

12. Dispositif suivant la revendication 11, **caractérisé en ce que** l'axe (4) de basculement est en dehors de l'axe (11) de l'arbre de mesure.

13. Dispositif suivant l'une des revendications 9 à 12, **caractérisé en ce que** la source (6) lumineuse et le récepteur (7) sont mis sous précontrainte dans une position de repos.
